# EUROPEAN PATENT SPECIFICATION

(11) **EP 3 359 395 B1**
(45) Date of publication and mention of the grant of the patent: **30.03.2022**
(21) Application number: 16795155.7
(22) Date of filing: 05.10.2016
(51) Int. Cl.: B60B 3/14, B60B 3/16, B60B 7/04, B60B 7/06, B60B 7/12, F16B 31/04, F16B 37/14, F16B 39/10

(54) **SAFETY DEVICE FOR A VEHICLE WHEEL**
SICHERUNGSVORRICHTUNG FÜR EIN FAHRZEUGRAD
DISPOSITIF DE SÉCURITÉ POUR UNE ROUE DE VÉHICULE

(30) Priority: 08.10.2015 IT UB20154218
(43) Date of publication of application: 15.08.2018
(73) Proprietor: Basso Francesco Lavorazioni Meccaniche, 31038 Postioma di Paese (TV) (IT)
(72) Inventor: BASSO, Francesco, 31038 Postioma di Paese (TV) (IT)
(74) Representative: Marri, Luca
(86) International application number: PCT/IB2016/055956
(87) International publication number: WO 2017/060830

(56) References cited:
- EP-A1- 1 538 351
- WO-A1-00/79140
- GB-A- 2 394 263
- US-A1- 2005 151 414

## Description

The present invention relates to a safety device for a vehicle wheel. In particular, the present invention relates to a safety device able to prevent the loosening, and consequently detachment, of the wheel fastening elements from the vehicle hub.

It is known that the wheels of vehicles (motorcars, motorcycles, lorries, buses, etc.) must be periodically inspected, for example in order to check their state of wear, the tyre inflation pressure, the wheel alignment, etc., but also in order to check that the fastening nuts are properly tightened.

Vibrations and any impacts with foreign bodies may cause gradual loosening of the wheel fastening nuts, with the result that, if said loosening is not noticed in good time, the fastening nut may come entirely off the hub stud on which it is mounted, with obvious danger both for the vehicle on which the wheel is mounted and for the vehicles or persons who may be in the vicinity. The nut could, in fact, strike other vehicles or, if more than one nut were to come loose at the same time, the wheel could even come off the hub.

Safety devices which are designed to prevent loosening and detachment of the wheel fastening nuts are known.

EP 2605921 describes a safety device which comprises locking elements, designed to prevent rotation of the wheel fastening nuts, and a disk-shaped covering element having the function of keeping the locking elements in position.

In detail, the locking elements consist of a plurality of female elements, each of which is intended to receive at least partially a fastening nut, so as to be rigidly fixed thereto.

These female elements have an internal profile generally provided with gripping teeth so as to prevent, once fixed to the nut, relative rotation of nut and locking element.

Moreover, the locking elements have an external profile designed to cooperate with the peripheral surface of the disk-shaped covering element, which is in turn fixed onto the hub.

Any loosening of the fastening nut could cause a rotation of the female element associated with it. The interaction between the outer surface of the female element and the peripheral surface of the covering element prevents the fastening nut from being able to come further loose.

The covering element is fixed to the hub using at least two of the wheel fastening nuts and ensures that the female elements, moving in a direction substantially parallel to the axis of the hub stud, cannot come off the nut on which they are mounted.

This device, while being valid, is not without drawbacks.

Firstly it should be noted how the fastening nuts used to fix the covering element in position remain visible. Female elements similar to those positioned on the remaining fastening nuts are positioned on these nuts, although these elements, since they are not covered by the covering element, may come off the nut onto which they are fixed.

Moreover, dirt may accumulate inside the seats which receive the fastening nuts of the covering element, thus making it difficult to remove them. Furthermore, the covering element in these zones, owing to the dirt, could be more prone to corrosion.

This drawback may be overcome at least partially by fixing protective nut caps in the seats where the fastening nuts of the covering element are positioned. However, it is clear how the provision of these further protection elements complicates the structure of the safety device, increasing its costs and the time required for removal and assembly of the safety device.

Finally, it is not always easy to fix the female elements onto the nuts. Each female element, in fact, must be engaged with the respective nut before the covering element is fixed to the wheel hub. It may happen during this operation that the outer surface of the female element interferes with the perimetral surface of the covering element, preventing it from being fixed. In order to overcome this problem it is necessary to remove the covering element, extract the female element from the nut and insert it again at a different angle. It is clear therefore how assembly of the covering element may be a slow and laborious procedure since the aforementioned problem may occur with more than one female element.

An alternative solution is described in AT397789 which relates to a safety device which comprises a safety ring and a plurality of nut caps designed to be fixed onto the wheel fastening nuts.

The nut caps are provided, on the their top surface, with suitably shaped projections.

The safety ring is in turn provided along its perimetral profile with shaped slits so as to be able to receive the projections of the nut caps. Any rotation of the nut is prevented by the interaction between the projection of the nut cap and the corresponding slit on the safety ring.

Moreover, the safety ring, since it arranged in contact with the top surface of the nut cap, prevents the nut caps from coming off the nut onto which they have been fitted.

The safety ring is fixed to the wheel hub using two fastening nuts of the wheel itself.

This solution too, while being valid, is not without drawbacks.

The nuts for fixing the safety disk are in fact free to come loose from the stud onto which they are fixed, such that not only the safety disk risks becoming detached, but the wheel may also come off.

Furthermore, in a manner similar to that described with reference to the previous solution, fixing of the safety ring is not easy. The nut caps must be fitted to the respect nuts before the safety ring is fixed to the hub.

It may therefore happen that the nut caps are positioned such that the respective projections do not tally with the slits provided in the safety ring. In this case the nut caps must be removed and then fitted again onto the respective nuts.

Finally, the safety ring is spaced from the wheel rim and therefore dirt or foreign matter may accumulate between the ring and rim.

A further safety device for a wheel is known by document GB 2 394 263 A.

The object of the present invention is therefore to overcome at least partially the drawbacks mentioned above with reference to the prior art.

In particular, one task of the present invention is to provide a safety device for a vehicle wheel which is able to prevent loosening and detachment of all the wheel fastening elements.

Moreover, a second task of the present invention is to provide a safety device for a vehicle wheel which has a simplified structure.

Furthermore, a third task of the present invention is to provide a safety device for a vehicle wheel which may be easily fitted, and where necessary removed, onto/from the vehicle wheel.

Finally, a further task of the present invention is to provide a safety device for a vehicle wheel which has an attractive appearance.

The aforementioned object and tasks are achieved by a safety device for a vehicle wheel in accordance with that claimed in claim 1.

The characteristic features and further advantages of the invention will emerge from the description, provided hereinbelow, of a number of examples of embodiment, provided by way of a non-limiting example, with reference to the accompanying drawings in which:
Figure 1 shows in schematic form an exploded view of a vehicle wheel and a safety device according to the invention;
Figures 2 shows in schematic form a view, on a larger scale, of the detail indicated by A in Figure 1;
Figure 3 shows in schematic form a top plan view of a first element of the safety device according to the invention;
Figure 3A shows a view, similar to that of Figure 3, but relating to a different embodiment;
Figure 4 shows in schematic form a view, on a larger scale, of the detail indicated by B in Figure 3;
Figure 5 shows in schematic form the cross-section along the plane indicated by V-V in Figure 4;
Figure 6 shows in schematic form the cross-section along the plane indicated by VI-VI in Figure 4;
Figure 7 shows in schematic form a side view of a second element of the safety device according to the invention;
Figure 7A shows a view, similar to that of Figure 7, but relating to a different embodiment;
Figures 8 shows in schematic form a top plan view of the element of Figure 7;
Figure 8A shows in schematic form the cross-section along the plane indicated by VIIIa-VIIIa in Figure 7A;
Figures 9 shows in schematic form a bottom plan view of the element of Figure 7;
Figures 9A shows in schematic form a bottom plan view of the element of Figure 7A;
Figure 10 shows in schematic form a top plan view of the elements of the safety device according to the invention in the non-assembled configuration;
Figure 11 shows in schematic form a partially sectioned top plan view of the safety device according to the invention with the corresponding elements in the assembled configuration;
Figure 12 shows in schematic form a cross-sectional view of a detail of the elements of the safety device in the non-assembled configuration;
Figure 13 shows in schematic form a view similar to that of Figure 12, in which the elements of the safety device are in the assembled configuration;
Figure 13A shows a view, similar to that of Figure 13, but relating to a different embodiment;
Figure 14 shows in schematic form a top plan view of a second embodiment of the third element of the safety device;
Figure 15 shows in schematic form a top plan view of a detail of the element shown in Figure 14 when located in a configuration engaged with the second element of the safety device;
Figure 16 shows in schematic form a front view of a further embodiment of the second element of the safety device.

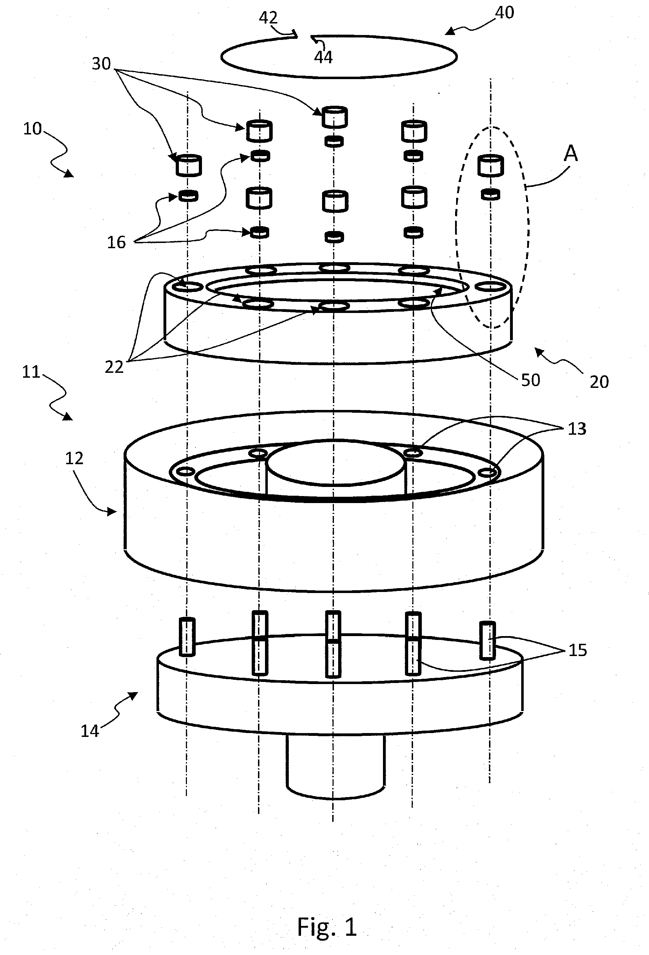

With reference to the figures, Figure 1 shows a safety device 10 applying the principles of the present invention.

The safety device 10 is intended to be fitted onto a wheel 11 of a vehicle. As schematically shown in Figure 1, the wheel 11 of a vehicle generally comprises a rim 12 onto which a tyre (not shown in the figure) is mounted. The rim is usually fixed to a hub 14 of the vehicle by means of rotational fastening means 16, for example fastening nuts.

Generally, the rotational fastening means 16 are screwed onto the fixing studs 15 of the hub 14, after the latter have been engaged inside suitable seats 13 provided in the rim 12 so as to rigidly join the rim 12 to the hub 14.

The function of the safety device 10 is to prevent loosening of rotational fastening means 16 of the wheel 11 and therefore ensure that, during use of the vehicle, the wheel 11 is always correctly fixed to the hub 14.

Advantageously, the safety device 10 has been designed to be mounted on wheels of vehicles intended for road transportation of goods or person, for example lorries or coaches. As will become clear from the description below, the innovative principles of the present invention may, however, be applied also to other types of vehicles.

The safety device 10 comprises a plurality of locking elements 30. Each locking element 30 is suitable for being fitted onto one of the rotational fastening elements 16 of the wheel 11, so as to be constrained to rotate together with the rotational fastening element 16. In other words, once the locking element 30 is fitted onto the fastening element 16, there is no relative rotation of the locking element 30 and the fastening element 16.

The safety device 10 further comprises a protection element 20 which is suitable for being fixed to the rim 12. The protection element 20 comprises a plurality of housing cavities 22. Each housing cavity 22 is suitable for receiving a locking element 30.

The safety device 10 also comprises securing means suitable for interfering with the locking elements 30 so as prevent rotation and/or extraction of said locking elements from the rotational fastening elements 16.

In accordance with the invention, the securing means comprise a gripping element 40 suitable for being inserted inside a seat 50 so as to radially engage each locking element 30. In this way it is advantageously ensured that the locking element 30, during use, does not come off the fastening element 16 onto which it is fitted. It is also ensured, therefore, that the locking element 30 does not come out of its housing cavity 22.

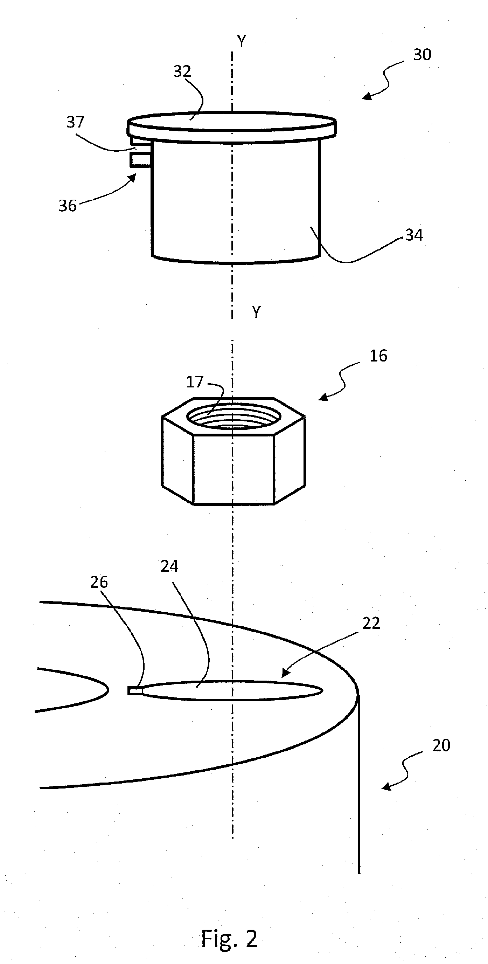

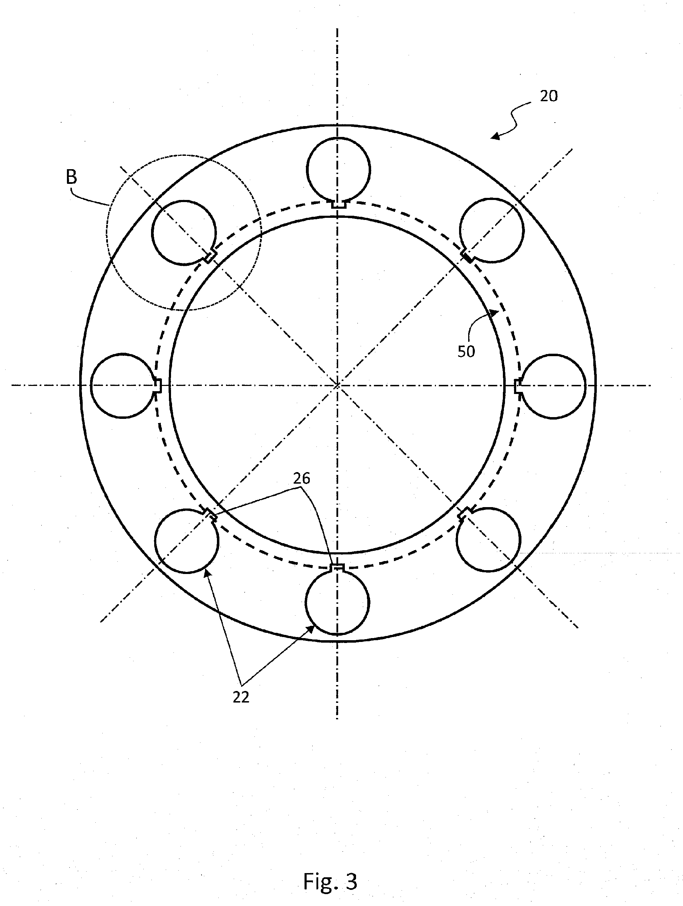

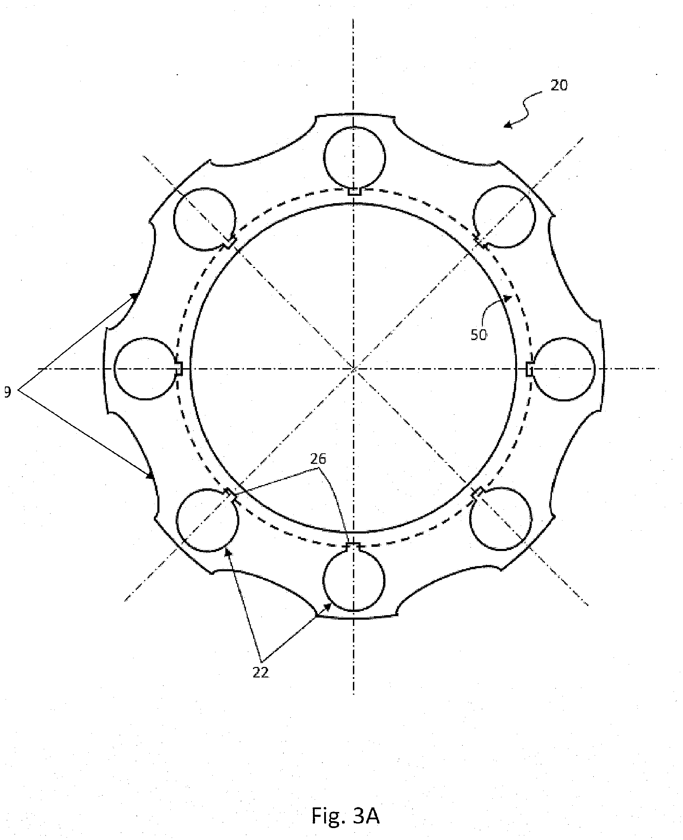

Preferably, as shown for example in Figures 2, 3 and 3A, each housing cavity 22 is shaped so as to prevent rotation of the locking element 30 about its unscrewing axis Y. Essentially, in this embodiment, the locking elements 30 are not rotatable inside their housing cavities.

The number of housing cavities 22 is preferably the same as that of the fastening elements 16. Figure 1 shows in schematic form a safety device 10 suitable for being fixed to a wheel 11 which, in order to be secured to the hub 14, requires the use of eight fastening nuts 16. In this embodiment, the protection element 20 may therefore be provided with eight housing cavities 22. The housing cavities 22 are arranged in positions corresponding to those of the studs 15 so as to receive the latter. These housing cavities 22 advantageously have dimensions such as to be able to receive the fastening elements 16 with lateral play sufficient for insertion of a tightening tool.

Below, for the sake of easier illustration, reference will be made to an embodiment of the wheel 11 in which the fastening means 16 consist of fastening nuts. As will become clear from the description below, the safety device 10 according to the present invention may advantageously be used also with wheels fixed to the hub 14 using different rotational fastening means.

Advantageously, the gripping element 40 may radially engage each locking element 30 so as to prevent also a rotation of the locking element 30 inside its housing cavity.

In this embodiment, the gripping element 40 will therefore be able to prevent both the locking element 30 from being able to come off the fastening element 16 on which it is mounted and the locking element 30 from being able to rotate inside its housing cavity 22. Stopping the rotation of the locking element 30 also stops possible rotation of the fastening element 16 associated with it and therefore ensures that the fastening element 16 cannot become unscrewed.

Reference is now made specifically to Figures 3, 3A, 4, 5 and 6 showing the protection element 20 and some of its constructional details.

Advantageously, the protection element 20 may have a form and dimensions similar to those of a normal hub cap which, as stipulated by normal road safety standards, is generally used to cover and protect the elements for fastening a wheel to the hub. The function of the hub cap is in fact that of preventing the fastening members from coming into contact with persons or things which are situated in the vicinity.

As schematically shown in Figures 1 and 3, the protection element 20 may therefore have toroidal form, with a cross-section which is for example square, rectangular or circular shaped.

Alternatively, as shown in Figure 3A, the protection element 20 may have an external profile provided with recesses 29. This embodiment reduces advantageously the risk of collision of the protection element 20 with external bodies, for example the pavement, without adversely affecting operation of the entire safety device 10.

The thickness of the protection element 20 is preferably designed to ensure, in a manner similar to a normal hub cap, that the studs 15 of the hub 14 do not project from the protection element 20, once the latter has been fixed to the rim.

The protection element 20 may, moreover, abut with its bottom surface against the rim 12 of the wheel 11, preventing any foreign matter from becoming wedged between the element 20 and the rim 12.

However, different embodiments of the protection element 20 may be easily imagined by the person skilled in the art in order to satisfy specific needs.

As already mentioned, the protection element 20 is intended to be fixed to the rim 12 using preferably the fastening nuts 16 used to fix the wheel 11 to the hub 14.

Advantageously, each housing cavity 22 may have a cross-section with a polygonal shape suitable for matching a cross-section of the locking element 30 inserted inside it.

For example, the housing cavity may have a square or pentagonal cross-section suitable for matching a corresponding square or pentagonal cross-section of the locking element 30.

The form-fit realized between housing cavity 22 and locking element 30 prevents rotation of the locking element 30 and consequently rotation of the rotational fastening element constrained to it.

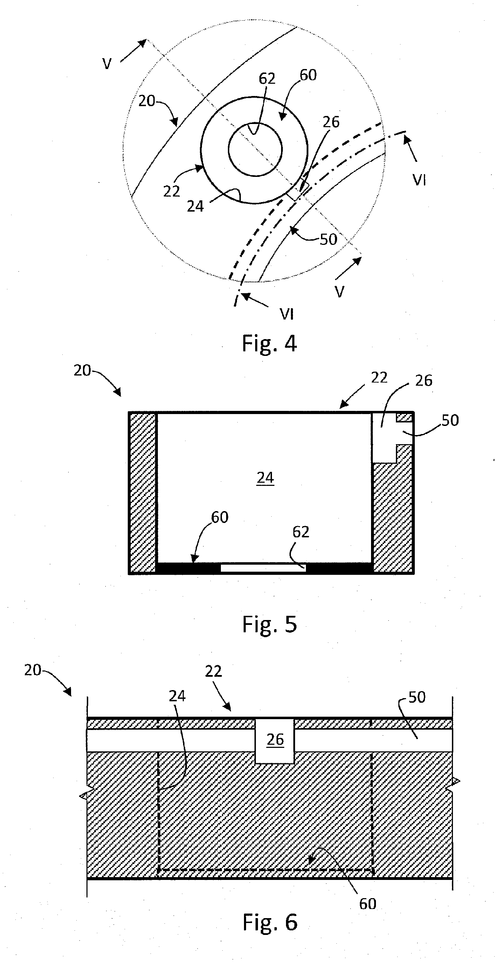

In detail, with reference to Figures 4-6, a fixing hole 62 is preferably provided on the bottom surface of each housing cavity 22.

Each fixing hole 62 advantageously has a shape and size substantially corresponding to the shape and size of the cross-section of the studs 15 of the hub 14.

The protection device 20 may advantageously be fixed to the rim 12 by inserting each stud 15 first inside the fixing hole 13 on the rim 12 and then inside the fixing hole 62 of the facing bottom surface of the device 20. By screwing wheel fastening nuts 16 onto the thread of the stud 15 it will therefore be possible, by means of a single operation, to fix the rim to the hub and the protection device to the rim.

Advantageously, the protection element 20 may be made of polymer material, for example polyamide, glass-reinforced polyamide, polypropylene, glass-reinforced polypropylene or acrylonitrile butadiene styrene (ABS). Alternatively, the protection element 20 may be made of metallic material. For example, the element 20 may be made of aluminium or stainless steel.

Preferably, a washer 60, advantageously made of metallic material, may be provided on the bottom surface of each housing cavity 22.

The washer 60 in a known manner is able to ensure an increased gripping action of the fastening nut on the bottom surface of the protection element 20 (see Figure 5). In this embodiment, the fixing hole 62 will be provided in the washer 60.

Preferably, a washer 60 will be provided in at least two housing cavities.

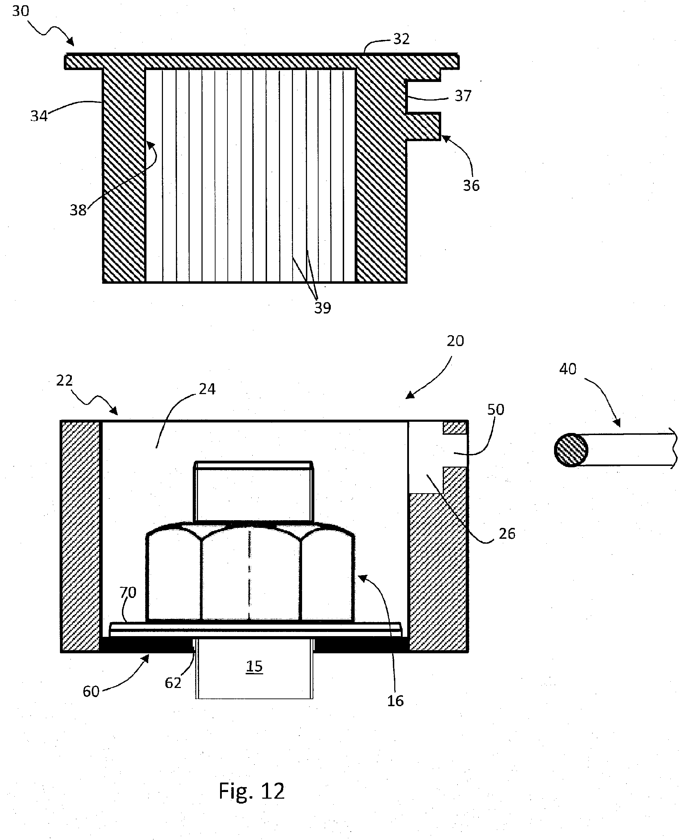

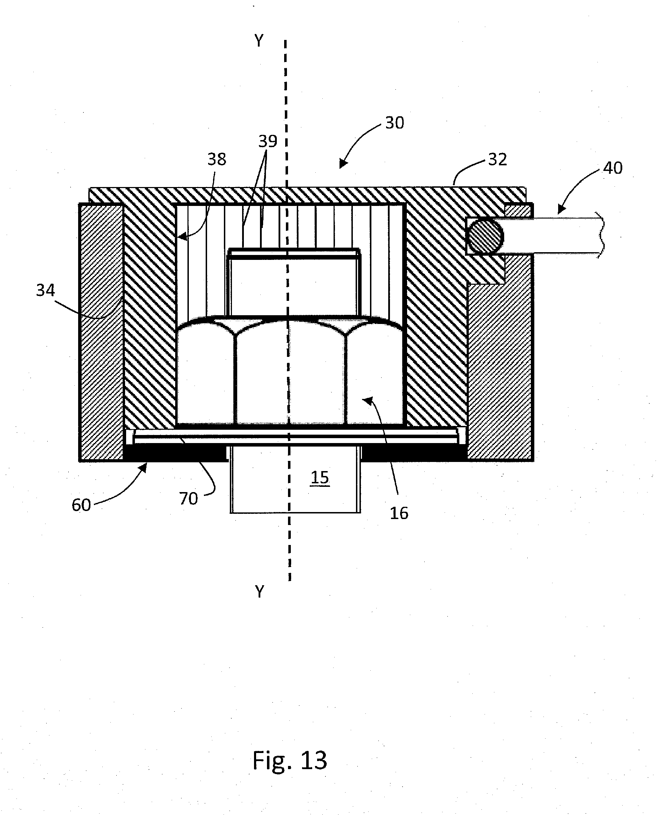

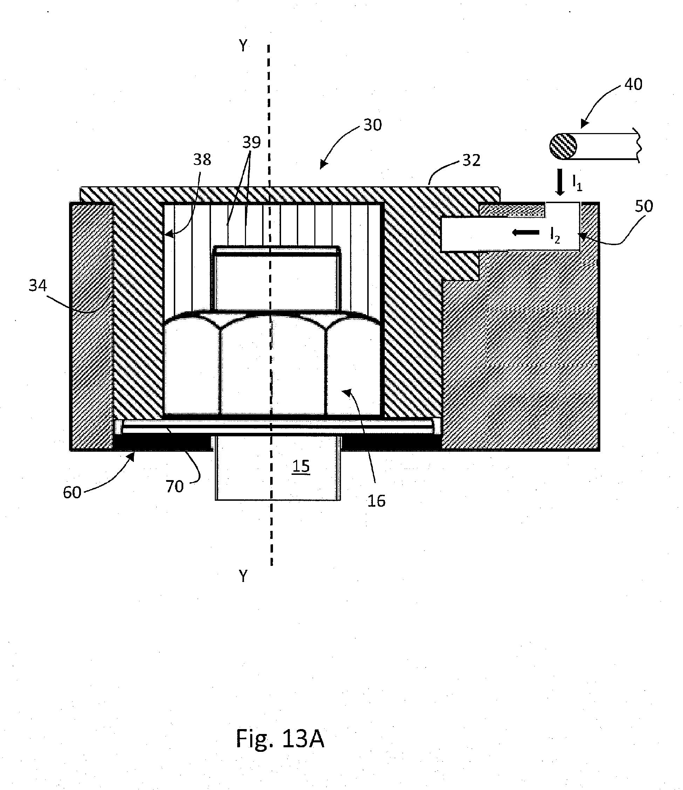

A further washer 70 may be arranged between the bottom surface of the cavity 22 and the nut (see Figures 12, 13, 13A).

As shown in the attached figures, each housing cavity 22 may be provided with a stop 26 suitable for being engaged by a corresponding striker 36 provided on the locking element 30, once the latter has been inserted inside the cavity 22.

In the embodiment shown, each housing cavity 22 has a substantially cylindrical shape. The stop 26 preferably consists of a radial projection formed on a side surface 24 of the cavity 22.

In another embodiment, not shown, but able to be easily imagined by a person skilled in the art, the stop 26 may consist of a recess provided in the side surface 24 of the cavity 22, along a radial direction.

Alternatively, the stop 26 may consist of a recess or a projection arranged on the bottom surface of the cavity 22, in the longitudinal direction.

In the embodiments shown (see for example Figures 3 and 3A) the stops 26 are directed towards the inside of the protection element 20. According to alternative embodiments, which may be easily imagined by a person skilled in the art, the stops 26 may be differently oriented, for example the stops 26 may be directed towards the outside of the element. According to further embodiments, the stops may be arranged oriented in different directions.

The safety device 20 is moreover provided with a seat 50 intended to receive, when the device is in use, the gripping element 40.

In the embodiment shown, the seat 50 preferably communicates with each housing cavity 22 of the protection element 20. In this way, when the gripping element 40 is inserted inside the seat 50, advantageously it may come into contact, along a radial direction, with each locking element 30 so as to prevent it from coming out of the corresponding seat 22 and possibly rotating about its unscrewing axis Y.

Advantageously, the seat 50 communicates with the stop 26 provided inside each housing cavity 22. In this way, the gripping element 40, once inserted inside its seat 50, will engage with the striker 36 of each locking element 30.

Preferably the seat 50 consists of a circular-shaped groove. Advantageously, in the case where the protection element 20 has a toroidal shape, the seat 50 may be provided on the inner surface of the protection element, the inner surface being understood as being the surface of the inner ring of the toroid (see Figure 13).

Alternatively, the seat 50 may be provided on the outer surface of the protection element.

According to a further embodiment the protection element is provided with two housing seats 50, one arranged on the inner surface and one arranged on the outer surface of the protection element 20.

In this embodiment, the safety device 20 may therefore be provided with two gripping elements 40 with dimensions such that they can be inserted respectively into the inner housing seat and outer housing seat 50 provided in the protection element.

In this embodiment both the gripping rings may engage radially the locking elements 30 in two different zones, thus doubling the safety.

According to a further embodiment, shown schematically in Figure 13A, the seat 50 is formed by an L-shaped groove, rotated through 90° in an anti-clockwise direction. In other words, the seat 50 is formed by two sections; a first substantially vertical section and a second substantially horizontal section.

In this embodiment, the gripping element 40, made of a sufficiently elastic material, is firstly inserted inside the first section of the seat 50, along a direction I_{1,} substantially parallel to the unscrewing axis of the locking element 30. Then it is made to slide along the second section of the seat 50, along a direction I₂, so that the gripping ring may radially engage the locking element 30.

This embodiment is particularly advantageous since, although the gripping element 40 engages radially each locking element 30, the insertion of the gripping ring 40 inside its seat is performed frontally, facilitating further the installation and removal of the safety device 10.

Reliefs will be provided in the vicinity of the seat 50 for allowing insertion of a screwdriver or a similar instrument, so as to allow removal of the gripping ring 40 from the seat 50.

As shown schematically in Figures 12, 13, 13A, the height of the seat 50 corresponds substantially to the thickness of the gripping element 40 so as to ensure more stable fixing thereof to the protection element.

The seat 50 may be advantageously provided with a stop, for example a hole or a cavity, suitable for housing at least one end 42 of the gripping element 40 so as to prevent the gripping element 40 from coming accidentally out of its seat 50 during use of the safety device.

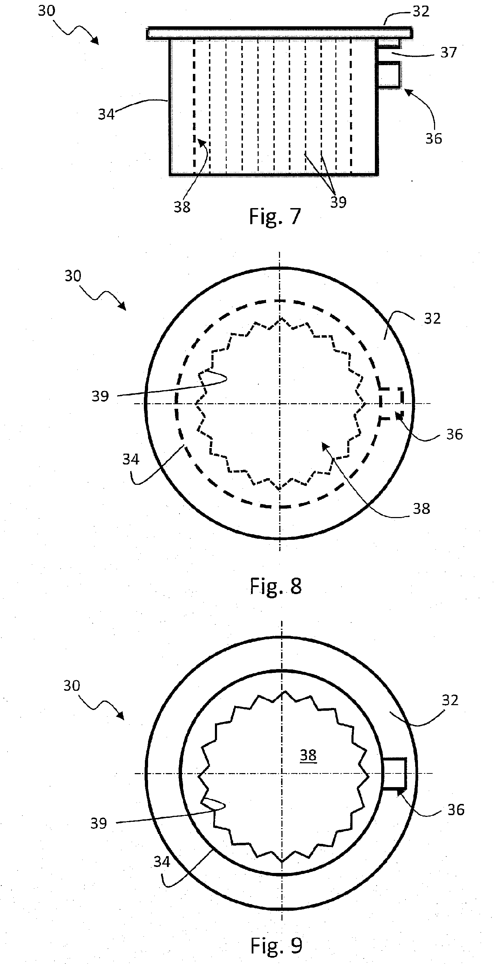

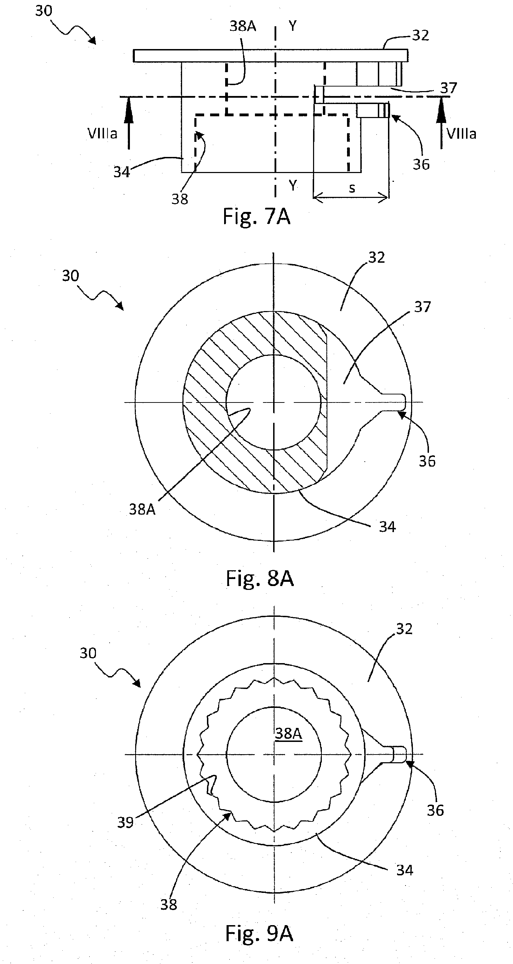

Specific reference will now be made to Figures 7, 8, 9, 7A, 8A, 9A which show in schematic form a locking element 30.

The locking element 30 preferably has a shape and dimensions such as to match substantially the housing cavity 22 provided in the protection element 20. In this way the insertion of the locking element 30 inside its housing cavity is facilitated.

With reference to the embodiment shown, the locking element 30 has a cylindrical shape such as to match the cylindrical cavity 22 of the protection element 20. Preferably, the locking element 30 is provided with a top surface 32 having dimensions greater than the dimensions of the cavity 22.

This surface 32 is therefore intended to abut against the top surface of the protection element 20 so as to project from the cavity 22 and be able to be easily gripped and pulled in the case where the locking element 30 must be removed from the cavity 22.

Advantageously the locking element 30 may be provided with a cavity 38 suitable for housing at least partially a wheel fastening nut 16.

The cavity 38 preferably is provided with engaging means 39 suitable for constraining rotationally together the locking element 30 and the fastening element inserted inside it.

Said engaging means consist preferably of gripping teeth 39 provided at least on the surface of the cavity 38 intended to come into direct contact with the fastening nut 16.

The function of the engaging means 39 is to prevent the possibility of relative rotation of the locking element 30 and fastening nut 16 about a longitudinal axis Y (unscrewing axis of the nut), once the locking element 30 has been mounted on the fastening nut 16 (see Figure 13).

According to alternative embodiments, not shown in the attached figures, different engaging means designed to cooperate with the outer surface of the nut 16 may be provided on the inner surface of the cavity 38. For example, the surface intended to come into contact with the nut may be provided with one or more gripping rings suitable for enclosing the side surface of the nut so as to prevent a relative rotation of locking element and nut.

Each locking element 30 of the safety device 10 may be provided with a striker 36 intended to interact with the stop 26 so as to ensure that the assembly formed by the locking element 30 and the fastening nut 16 cannot rotate about the unscrewing axis Y. Advantageously, the striker 36 has a shape substantially matching that of the stop 26.

Advantageously, a certain play will be provided between striker 36 and stop 26 so as to ensure that mounting of the locking element 30 onto the rotational fastening element 16 may be performed with a certain tolerance.

In the embodiment shown, the striker 36 preferably consists of a radial projection formed on a side surface of the locking element 30. This projection is intended, once the locking element 30 is inserted inside the cavity 22, to engage the stop 26 which in this embodiment consists of a radial projection provided inside the cavity 22.

In a different embodiment the striker 36 will consist of a groove arranged along a radial direction. The groove will be suitable for engagement with a corresponding projection 26 (stop) provided on the side surface 24 of the cavity 22 and directed towards the inside of the cavity 22.

In a further embodiment, the striker 36 may consist of a projection or recess provided on a bottom surface of the locking element 30. In this case, the stop will consist, respectively, of a recess or projection provided on the bottom surface of the cavity 22.

The outer surface of the locking element 39 is provided with a seat 37 suitable for housing at least one portion of the gripping element 40.

As shown in schematic form in Figures 7, 7A, 12 and 13, the seat 37 may be provided opposite the striker 36.

In the embodiment shown, this seat 37 consists of a radial groove with a height the same as the thickness of the gripping element 40.

The seat 37 will preferably have a height at least equal to the thickness of the gripping element 40 also in the case where it is provided on a side surface of the locking element 30.

As already mentioned, owing to the provision of the seat 37, it is ensured that the gripping element 40, once inserted inside its seat 50, engages with each locking element 30 of the safety device 10, preventing the locking elements 30 from being able to move during use along a direction parallel to the axis Y, coming out of the respective housing cavity 22 (see Figure 13).

With specific reference to Figures 7A, 8A, 9A, according to an alternative embodiment, the cavity 38 is provided with a narrow section 38A in a top portion thereof. The presence of this narrow section 38A advantageously allows a seat 37 of greater length to be provided in the locking element 30 (indicated by "s" in Figure 7A), so that the gripping ring 40 may engage a larger portion of the locking element 30.

In this way an even more stable engagement between gripping ring 40 and locking element 30 is provided and it is therefore ensured that the locking element 30 cannot come off the corresponding fastening means 16.

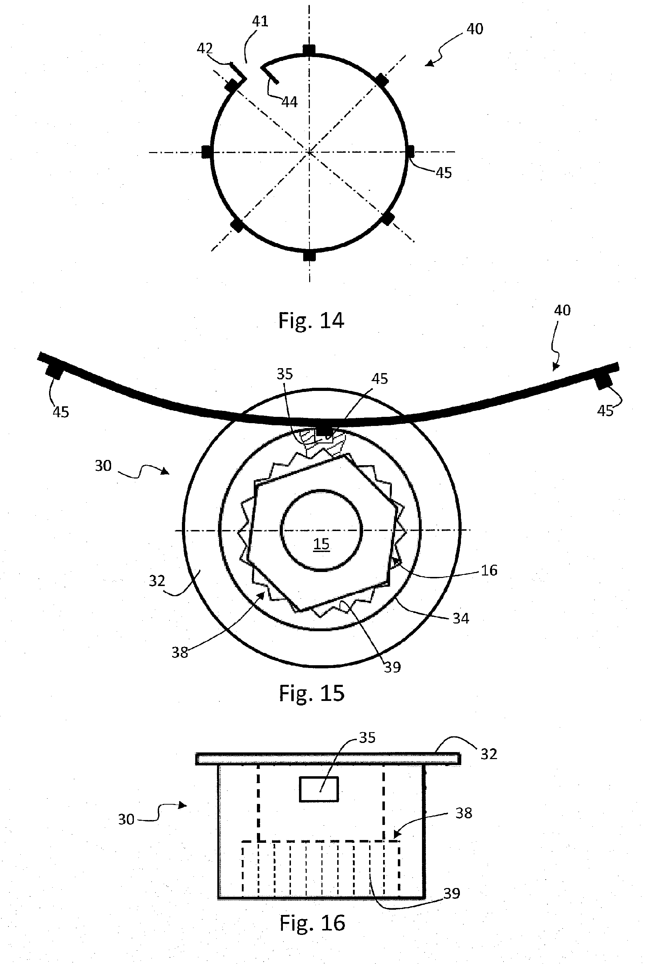

An alternative embodiment of the locking element 30 is shown in Figure 16.

In this embodiment, the locking element 30 has a substantially cylindrical shape and is suitable for being inserted inside a corresponding housing cavity 22 with a cylindrical shape. A slit/cavity 35 may be provided on the outer surface of the locking element 30. This slit 35 has a shape and size suitable for engagement with the securing means of the safety device 10.

Advantageously, a reference mark indicating the position of the underlying cavity 35 may be provided on the top surface 32 of the locking element 30. In this embodiment, in fact, as will be explained below, the form-fit between housing cavity 22 and locking element 30 does not prevent the rotation of the latter about its unscrewing axis Y. This rotation, as well as extraction from the housing cavity, will be prevented by engagement of the cavity 35 with the securing means of the safety device.

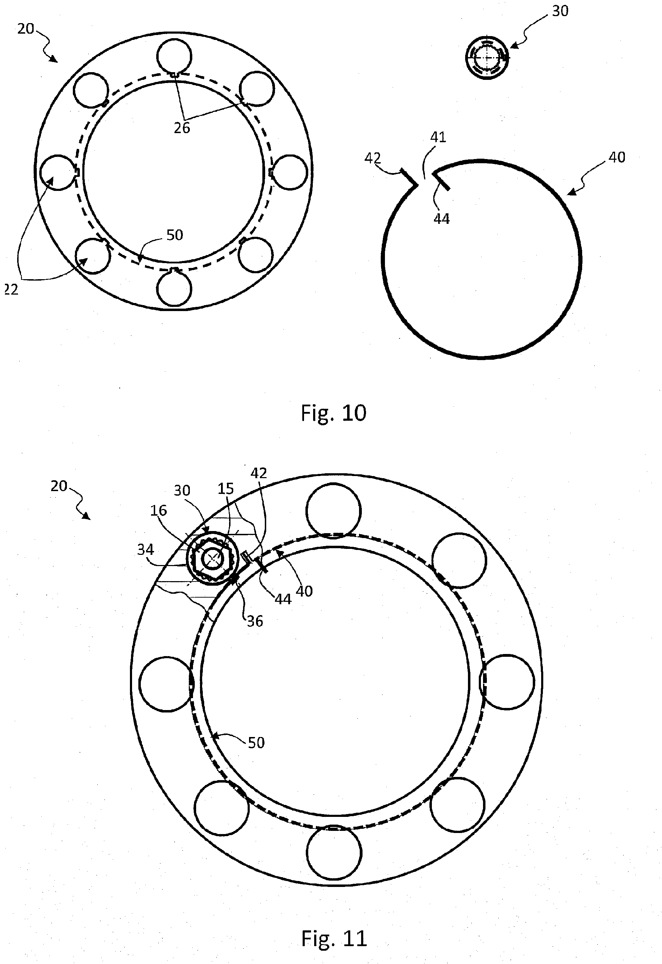

With reference now to Figures 1 and 10 the gripping element 40 preferably has an annular shape and may be made advantageously of metal wire, for example stainless steel or spring steel.

Alternatively, the gripping ring 40 may be made of polymer material, for example glass-reinforced polyamide, polypropylene, glass-reinforced polypropylene or acrylonitrile butadiene styrene (ABS).

These materials, if combined with suitable thicknesses, on the one hand provide the element 40 with the necessary mechanical strength for keeping the locking elements 30 in position and, on the other hand, give the element 40 the necessary elasticity for allowing easy insertion into or removal from the seat 50.

Advantageously, the gripping element 40 may have an open annular form.

The opening 41 of the gripping element 40 is preferably provided with two lugs 42, 44 which preferably extend radially from the gripping element, in opposite directions.

As already mentioned, the lug 42 has preferably the function of acting as a fixing means for the gripping element 40. In fact, it may be inserted inside a corresponding stop provided in the seat 50.

The lug 44, in turn, has the function of facilitating removal of the gripping element 40 from its seat 50.

The gripping element 40 and/or the seat 50 may be designed for resilient snapengagement of the gripping element 40 inside the seat 50.

As schematically shown in Figure 11, the lug 44 has preferably dimensions such as to allow it to project from the seat 50, when the gripping element 40 is inserted inside the seat 50.

The user, by gripping the lug 44 and exerting a light pulling force, may remove the element 40, if required, from its seat.

In the case where the gripping element 40 must be inserted inside a seat 50, such as that shown in schematic form in Figure 13A, the gripping element 40 will be provided preferably with a single lug suitable for being arranged along a direction parallel to the axis Y of the locking element 30.

This lug advantageously is suitable for engagement with a corresponding hole provided in the protection element 20. This hole, in turn, may be connected to an eyelet arranged along a radial direction of the protection element 20 so as to be accessible from the inner surface of the protection element 20.

The user, via said eyelet, may advantageously grip the vertical lug of the gripping element 40 so as to be able to remove the latter from its seat 50.

As shown schematically in Figures 12, 13, 13A, the gripping element 40 will have a cross-section with a circular shape.

Different embodiments of the gripping element 40 are however possible in order to satisfy specific needs.

With reference to Figures 14 and 15, in a further embodiment, the gripping element 40 is provided with radial coupling elements 45.

These radial coupling elements 45, which consist of the same number as the number of locking elements 30, are intended to engage, once the gripping element 40 is inserted inside its seat 50, with the side surface of the locking element 30.

As schematically shown in Figure 15, this embodiment of the gripping element 40 is advantageously suitable for use with the locking elements shown in Figure 16.

The radial coupling element 45 has in fact a shape and size suitable for engagement inside the cavity 35 of the locking element 30.

Obviously, minimum play will be provided between the coupling element 45 and the corresponding cavity 35 in order to ensure that the engagement between coupling element 45 and cavity 35 may be performed with a certain tolerance.

As schematically shown in Figure 15, the engagement between coupling element 45 and cavity 35 prevents the locking element 30 from being able to be extracted from the fastening element 16 to which it is fixed.

At the same time, the form-fit between coupling element 45 and cavity 35 also prevents the locking element 30 from being able to rotate about its unscrewing axis Y. Consequently it is ensured that the fastening element 16, once inserted inside the locking element 30, cannot rotate relative to the stud 15 of the hub.

As mentioned, the provision of any reference marks on the top surface 32 of the locking element 30 allows insertion of the locking elements 30 inside the corresponding cavity 22 to be performed in such a way that the various cavities 35 are arranged facing the coupling elements 45.

Below, with specific reference to the embodiment shown in Figures 1, 12 and 13, operation of the safety device 10 according to the invention is briefly described. The considerations provided below may also be applied to the other embodiments described.

As already mentioned, the protection element 20 of the safety device 10 is designed to be fixed to the rim 12 of the wheel 11. Said fixing operation may be performed at the same time as fixing of the rim 12 to the hub 14.

In greater detail, once the fixing studs 15 of the hub 14 have been inserted inside the fixing holes 13 of the rim 12, the protection element 20 of the device 10 may be moved towards the rim.

The portion of the stud 15 which projects from the top surface of the rim 12 is designed to be inserted inside the hole 62 so that it may be housed inside the cavity 22.

Then the protection element 20 is locked in position by screwing the fastening nuts 16 onto the studs 15 of the hub 14 (see Figure 12).

Thereafter, each locking element 30 is inserted inside a corresponding housing cavity 22 so as to be able to be mounted onto each fastening nut 16. In detail, the locking element 30 is inserted inside the corresponding cavity so that the top surface 31 abuts against the top surface of the protection element 20 and the striker 36 may engage the corresponding stop 26 of the cavity 22. At the same time the locking element is joined together with the fastening nut 16 so that the inner surface 38 of the locking element 30, and in particular the gripping teeth 39, may grip the side surface of the nut 16.

The presence of the gripping teeth 39 ensures that no relative sliding of the side surface of the nut 16 and the inner surface 38 of the locking element 30 may occur. In this way, since rotation of the locking element 30 is prevented by the interaction between striker 36 and stop 26, it is also ensured that the nut cannot rotate about its longitudinal axis and therefore cannot become unscrewed from the corresponding stud.

Finally, the gripping element 40 is arranged next to the protection element 20 so that it may be inserted inside its seat 50 and the lug 42 may engage the corresponding stop provided in the protection element 20.

Once it has been inserted inside its seat 50, the gripping element 40 radially engages the various locking elements 30 preventing them from being able to come out of the respective cavities.

The provision of the gripping element 40 therefore ensures that the various locking elements 30 remain locked inside their cavities and therefore that one or more of the locking elements 30 may not be lost during use, with the consequent risks.

If the protection device 10 must be removed, it is merely required to exert a pulling force on the lug 44 of the gripping element 40 so as to disengage the lug 42 from the respective stop and extract the gripping element 40, which has a certain elasticity, from its seat 50.

Then it is merely required to grip the top surfaces 32 of the various locking elements 30 in order to extract them from the respective housing cavities 22. Once the fastening nuts 16 have been unscrewed, the protection element 20 may be removed.

At this point it is clear how the predefined objects have been achieved.

Firstly it should be noted how the safety device 10 according to the invention is able to prevent the loosening and detachment of all the wheel fastening nuts.

The protection element 20, in fact, for being fixed in position does not require the provision of specific fixing means. Fixing is in fact performed using the same wheel fastening nuts.

Since all the fastening nuts 16 may be engaged with a locking element 30 which prevents unscrewing thereof from the stud 15, it is clear how, differently from the prior art, the device according to the invention offers greater protection.

Moreover, it is clear how the safety device 10 according to the invention has a simplified structure. The protection element 20 has, in fact, a structure similar to that of a normal hub cap and the interaction between locking elements and nuts is achieved by means of a form-fit between striker and stop which does not adversely affect the mechanical strength of the protection element.

Furthermore, the protection element 20 has advantageously a weight which is comparable to that of normal hub caps. If the protection element 20 is made of metallic material, the element 20 will have in any case advantageously a weight less than that of the safety devices of the known type.

Moreover, the provision of a gripping element such as that described ensures in a simple and low-cost manner that all the locking elements are simultaneously locked in position.

Furthermore, the insertion of the various locking elements inside the respective seats is performed "visibly" and it is therefore easy to ensure that the striker 36 coincides with the stop 26.

If the locking elements 30 are provided with a top surface 32 designed to abut with the protection element, any reference marks may be provided on this surface so as to define the exact position of the striker 36 or the cavity 35 and facilitate further the insertion of the locking element 30 inside the cavity 32 and engagement between locking element and gripping ring.

Finally, the safety device 10 has a pleasing appearance and allows all the wheel fastening means to be hidden from sight. Moreover, further safety systems of the electronic type, for example control units with sensors designed to detect the pressure of the tyres or any overheating of the hub, may be housed in the space between the various housing cavities 22 of the protection element 20.

Personalized designs or graphics may be added to the top surface of the protection element 20 and the respective locking elements 30.

Obviously the description above of an embodiment applying the innovative principles of the present invention is provided by way of example of these innovative principles and must therefore not be regarded as limiting the scope of the rights claimed herein. For example, the protection element may be divided into two or more parts, each suitable for being fixed on the wheel rim using the wheel fastening means.

In the case where the wheel has eight fastening nuts, a first protection element may be fixed over four first fastening nuts and a second protection element may be fixed over the remaining fastening nuts, so as to ensure in any case that all wheel fastening nuts are not subject to loosening.

Similarly, the gripping element may be divided into two or more parts, each of which is designed to engage with and fix in position some of the locking elements of the device.

## Claims

1. Safety device (10) for a wheel (11) of a vehicle comprising a rim (12); the rim (12) being designed to be fixed to a hub (14) by means of rotational fastening elements (16) and the safety device (10) comprising:
- a plurality of locking elements (30), each element of said plurality of locking elements (30) being suitable for being applied onto one of the rotational fastening elements (16) of the wheel (11) so as to be constrained to rotate together with the rotational fastening element (16);
- a protection element (20) suitable for being fixed to the rim (12) and comprising a plurality of housing cavities (22); each cavity of said plurality of housing cavities (22) being suitable for receiving one locking element (30);
- securing means suitable for interfering with the plurality of locking elements (30) to prevent the rotation and/or the extraction of said locking elements (30) from the rotational fastening elements (16);
the safety device (10) being **characterized in that**
the securing means comprising a gripping element (40) suitable for being inserted inside a seat (50) so as to radially engage each element of said plurality of locking elements (30), thereby preventing said locking element (30) from being extracted from the corresponding rotational fastening element (16) and from coming out of its housing cavity (22).

2. Safety device (10) according to claim 1, **characterized in that** each cavity of said plurality of housing cavities (22) is shaped so as to prevent a rotation of the locking element (30) about its unscrewing axis (Y).

3. Safety device (10) according to claim 1, **characterized in that** the gripping element (40) inside the seat (50) radially engages each element of said plurality of locking elements (30), thereby preventing also the rotation of said locking element (30) inside its housing cavity (22).

4. Safety device (10) according to claim 2, **characterized in that** each cavity of said plurality of housing cavities (22) has a cross-section of polygonal shape designed to match a cross-section of the locking element (30) received inside said cavity.

5. Safety device (10) according to claim 2, **characterized in that** each cavity of said plurality of housing cavities (22) is provided with a stop (26) suitable for being engaged by a corresponding striker (36) provided in the locking element (30) received in the housing cavity (22).

6. Safety device (10) according to claim 1, **characterized in that** each cavity of said plurality of housing cavities (22) is placed in a position corresponding to that of a fixing stud (15) of the hub (14), thereby receiving said fixing stud (15); said cavity (22) having dimensions such as to receive the corresponding rotational fastening element (16) with sufficient lateral play for the insertion of a tightening tool.

7. Safety device (10) according to claim 5, **characterized in that** the gripping element (40) is suitable for engaging the striker (36) provided in the locking element (30).

8. Safety device (10) according to claim 1, **characterized in that** the gripping element (40) is suitable for being fixed to the protection element (20) by means of hooking means (42) designed to radially engage a corresponding stop provided in the protection element (20).

9. Safety device (10) according to claim 1, **characterized in that** each element of said plurality of locking elements (30) is provided with a cavity (30), suitable for housing at least partially one rotational fastening element (16) of the wheel (11); said cavity (38) being provided with engaging means (39) suitable for ensuring the rotational constraint between locking element (30) and corresponding rotational fastening element (16).

10. Safety device (10) according to claim 1, **characterized in that** the protection element (20) has a substantially toroidal shape; said protection element (20) being suitable for abutting against the outer surface of the rim (12) and for being fixed to the rim (12) by means of the rotational fastening elements (16) of the wheel (11).

## Patentansprüche

1. Sicherheitsvorrichtung (10) für ein Rad (11) eines Fahrzeugs, umfassend eine Felge (12), wobei die Felge (12) dafür gestaltet ist, um mittels Rotationbefestigungselementen (16) an einer Nabe (14) befestigt zu werden, und die Sicherheitsvorrichtung (10) umfasst:
- mehrere Verriegelungselemente (30), wobei jedes Element der mehreren Verriegelungselement (30) dazu geeignet ist, auf eines der Rotationsbefestigungselemente (16) des Rads (11) aufgebracht zu werden, um so gezwungen zu sein, sich gemeinsam mit dem Drehbefestigungselement (16) zu drehen;
- ein Schutzelement (20), das dazu geeignet ist, an der Felge (12) befestigt zu werden, und mehrere Gehäusehohlräume (22) umfasst, wobei jeder Hohlraum der mehreren Gehäusehohlräume (22) dazu geeignet ist, ein Verriegelungselement (30) aufzunehmen;
- Sicherungsmittel, die dazu geeignet sind, in die mehreren Verriegelungselement (30) einzugreifen, um die Drehung und/oder das Herausziehen der Verriegelungselemente (30) aus den Rotationbefestigungselementen (16) zu verhindern;
wobei die Sicherheitsvorrichtung (10) **dadurch gekennzeichnet ist, dass**
die Sicherungsmittel ein Greifelement (40) umfassen, das dazu geeignet ist, in einen Sitz (50) eingesetzt zu werden, um mit jedem Element der mehreren Verriegelungselemente (30) radial in Eingriff zu kommen, wodurch verhindert wird, dass das Verriegelungselement (30) aus dem entsprechenden Rotationbefestigungselement (16) herausgezogen wird und aus seinem Gehäusehohlraum (22) herauskommt.

2. Sicherheitsvorrichtung (10) nach Anspruch 1, **dadurch gekennzeichnet, dass** jeder Hohlraum der mehreren Gehäusehohlräume (22) so geformt ist, dass eine Drehung des Verriegelungselements (30) um seine Ausdrehachse (Y) verhindert wird.

3. Sicherheitsvorrichtung (10) nach Anspruch 1, **dadurch gekennzeichnet, dass** das Greifelement (40) in dem Sitz (50) mit jedem Element der mehreren Verriegelungselemente (30) radial in Eingriff kommt, wodurch auch die Drehung der Verriegelungselemente (30) in ihren Gehäusehohlräumen (22) verhindert wird.

4. Sicherheitsvorrichtung (10) nach Anspruch 2, **dadurch gekennzeichnet, dass** jeder Hohlraum der mehreren Gehäusehohlräume (22) einen Querschnitt mit polygonaler Form aufweist, der so gestaltet ist, dass er zu einem Querschnitt des in dem Hohlraum aufgenommenen Verriegelungselements (30) passt.

5. Sicherheitsvorrichtung (10) nach Anspruch 2, **dadurch gekennzeichnet, dass** jeder Hohlraum der mehreren Gehäusehohlräume (22) mit einem Anschlag (26) versehen ist, der geeignet ist, mit einem entsprechenden Anschläger (36), der an dem in dem Gehäusehohlraum (22) aufgenommenen Verriegelungselement (30) vorgesehen ist, in Eingriff zu kommen.

6. Sicherheitsvorrichtung (10) nach Anspruch 1, **dadurch gekennzeichnet, dass** jeder Hohlraum der mehreren Gehäusehohlräume (22) in einer Position angeordnet ist, die derjenigen eines Befestigungsbolzens (15) der Nabe (14) entspricht, wodurch der Befestigungsbolzen (15) aufgenommen wird; wobei der Hohlraum (22) solche Abmessungen aufweist, dass er das entsprechende Rotationbefestigungselement (16) mit ausreichendem seitlichem Spiel für das Einsetzen eines Anziehwerkzeugs aufnimmt.

7. Sicherheitsvorrichtung (10) nach Anspruch 5, **dadurch gekennzeichnet, dass** das Greifelement (40) dazu geeignet ist, mit dem an dem Verriegelungselement (30) vorgesehenen Anschläger (36) in Eingriff zu kommen.

8. Sicherheitsvorrichtung (10) nach Anspruch 1, **dadurch gekennzeichnet, dass** das Greifelement (40) dazu geeignet ist, an dem Schutzelement (20) mittels Hakenmitteln (42), die so gestaltet sind, dass sie mit einem entsprechenden Anschlag, der an dem Schutzelement (20) vorgesehen ist, in Eingriff kommen, befestigt zu werden.

9. Sicherheitsvorrichtung (10) nach Anspruch 1, **dadurch gekennzeichnet, dass** jedes Element der mehreren Verriegelungselemente (30) mit einem Hohlraum (30) versehen ist, der geeignet ist, zumindest teilweise ein Rotationbefestigungselement (16) des Rades (11) aufzunehmen; wobei der Hohlraum (38) mit Eingriffsmitteln (39) versehen ist, die geeignet sind, den Drehzwang zwischen dem Verriegelungselement (30) und dem entsprechenden Rotationbefestigungselement (16) zu gewährleisten.

10. Sicherheitsvorrichtung (10) nach Anspruch 1, **dadurch gekennzeichnet, dass** das Schutzelement (20) eine im Wesentlichen toroidale Form aufweist; wobei das Schutzelement (20) geeignet ist, an der Außenfläche der Felge (12) anzuliegen und mittels der Rotationbefestigungselemente (16) des Rades (11) an der Felge (12) befestigt zu werden.

## Revendications

1. Dispositif de sécurité (10) destiné à une roue (11) d'un véhicule comprenant une jante (12) ; la jante (12) étant conçue pour être fixée sur un moyeu (14) à l'aide d'éléments de fixation rotatifs (16) et le dispositif de sécurité (10) comprenant :
- une pluralité d'éléments de verrouillage (30), chaque élément de ladite pluralité d'éléments de verrouillage (30) étant adapté pour être appliqué sur l'un des éléments de fixation rotatifs (16) de la roue (11) de façon à être contraint à tourner avec l'élément de fixation rotatif (16) ;
- un élément de protection (20) adapté pour être fixé sur la jante (12) et comprenant une pluralité de cavités de logement (22) ; chaque cavité de ladite pluralité de cavités de logement (22) étant adaptée pour recevoir un élément de verrouillage (30) ;
- un moyen de fixation adapté pour interférer avec la pluralité d'éléments de verrouillage (30) afin d'empêcher la rotation et/ou l'extraction desdits éléments de verrouillage (30) des éléments de fixation rotatifs (16) ;
le dispositif de sécurité (10) étant **caractérisé en ce que**
le moyen de fixation comprend un élément de saisie (40) adapté pour être inséré dans un siège (50) de façon à engager radialement chaque élément de ladite pluralité d'éléments de verrouillage (30), de façon à empêcher ledit élément de verrouillage (30) d'être extrait de l'élément de fixation rotatif correspondant (16) et de sortir de sa cavité de logement (22).

2. Dispositif de sécurité (10) selon la revendication 1, **caractérisé en ce que** chaque cavité de ladite pluralité de cavités de logement (22) est formée de façon à empêcher une rotation de l'élément de verrouillage (30) autour de son axe de dévissage (Y).

3. Dispositif de sécurité (10) selon la revendication 1, **caractérisé en ce que** l'élément de saisie (40) à l'intérieur du siège (50) engage radialement chaque élément de ladite pluralité d'éléments de verrouillage (30), afin d'empêcher également la rotation dudit élément de verrouillage (30) à l'intérieur de sa cavité de logement (22).

4. Dispositif de sécurité (10) selon la revendication 2, **caractérisé en ce que** chaque cavité de ladite pluralité de cavités de logement (22) possède une section transversale de forme polygonale conçue pour s'adapter à une section transversale de l'élément de verrouillage (30) reçu à l'intérieur de ladite cavité.

5. Dispositif de sécurité (10) selon la revendication 2, **caractérisé en ce que** chaque cavité de ladite pluralité de cavités de logement (22) est équipée d'une butée (26) adaptée pour être engagée par un heurtoir correspondant (36) prévu dans l'élément de verrouillage (30) reçu dans la cavité de logement (22).

6. Dispositif de sécurité (10) selon la revendication 1, **caractérisé en ce que** chaque cavité de ladite pluralité de cavités de logement (22) est placée dans une position correspondant à celle d'un goujon de fixation (15) du moyeu (14), afin de recevoir ledit goujon de fixation (15) ; ladite cavité (22) ayant des dimensions destinées à recevoir l'élément de fixation rotatif correspondant (16) avec un jeu latéral suffisant pour l'insertion d'un outil de serrage.

7. Dispositif de sécurité (10) selon la revendication 5, **caractérisé en ce que** l'élément de saisie (40) est adapté pour engager le heurtoir (36) prévu dans l'élément de verrouillage (30).

8. Dispositif de sécurité (10) selon la revendication 1, **caractérisé en ce que** l'élément de saisie (40) est adapté pour être fixé sur l'élément de protection (20) à l'aide d'un moyen de crochetage (42) conçu pour engager radialement une butée correspondante prévue dans l'élément de protection (20).

9. Dispositif de sécurité (10) selon la revendication 1, **caractérisé en ce que** chaque élément de ladite pluralité d'éléments de verrouillage (30) est équipé d'une cavité (30), adaptée pour contenir au moins partiellement un élément de fixation rotatif (16) de la roue (11) ; ladite cavité (38) étant équipée d'un moyen d'engagement (39) adapté pour garantir la contrainte de rotation entre l'élément de verrouillage (30) et l'élément de fixation rotatif correspondant (16).

10. Dispositif de sécurité (10) selon la revendication 1, **caractérisé en ce que** l'élément de protection (20) possède une forme sensiblement toroïde ; ledit élément de protection (20) étant adapté pour buter contre la surface externe de la jante (12) et pour être fixé sur la jante (12) à l'aide des éléments de fixation rotatifs (16) de la roue (11).
